# EUROPÄISCHE PATENTSCHRIFT

(11) **EP 2 390 030 B1**
(45) Veröffentlichungstag und Bekanntmachung des Hinweises auf die Patenterteilung: **27.04.2016**
(21) Anmeldenummer: 11165785.4
(22) Anmeldetag: 12.05.2011
(51) Int. Cl.: B23C 3/35, E05B 19/00, E05B 27/00, E05B 15/16, E05B 17/00

(54) **Verfahren zum Profilieren eines Flachschlüssels sowie nach dem Verfahren gefertigter Flachschlüssel**
Method for profiling a flat key and the flat key manufactured according to the method
Procédé destiné au profilage d'une clé plate tout comme clé plate fabriquée selon le procédé

(30) Priorität: 31.05.2010 DE 102010017166
(43) Veröffentlichungstag der Anmeldung: 30.11.2011
(73) Patentinhaber: C. Ed. Schulte Gesellschaft mit beschränkter Haftung Zylinderschlossfabrik, 42551 Velbert (DE)
(72) Erfinder: Reine, Michael, 45145, Essen (DE); Wallberg, Thomas, 42489, Wülfrath (DE)
(74) Vertreter: Grundmann, Dirk

(56) Entgegenhaltungen:
- EP-A1- 0 851 079
- DE-A1-102007 057 407
- DE-T2- 69 421 093

## Beschreibung

Die Erfindung betrifft einen Flachschlüssel und ein Verfahren zum Profilieren der Breitseite eines Flachschlüssels, wobei ein Schlüsselrohling in einer Spannvorrichtung derart eingespannt wird, dass seine Breitseite zur Bearbeitung frei liegt, wobei mit einem sich um eine Fräserwelle drehenden, auf seiner Umfangsfläche Fräszähne aufweisenden Fräser in einem Arbeitsgang zum Längsschnittprofil der Fräszähne komplementäre Führungs- und Variierungsnuten in die Breitseite eingefräst werden.

Flachschlüssel, die nach einem derartigen Verfahren hergestellt werden, besitzen einen länglichen Schlüsselschaft, dessen Breitseiten mit sich abwechselnden Nuten und Rippen profiliert sind. Die Rippen und Nuten verlaufen in Längserstreckungsrichtung des Schlüsselschaftes. Auf einer Seite besitzt der Schlüsselschaft eine Schlüsselspitze, mit der der Schlüssel in einen im Wesentlichen komplementär zum Schlüsselprofil profilierten Schlüsselkanal eines Schließzylinders eingesteckt werden kann. Auf der der Schlüsselspitze gegenüberliegenden Seite entspringt der Schlüsselschaft einer Reide. Derartige Flachschlüssel besitzen einen von einer Schmalseite des Schlüsselschaftes ausgebildeten Rücken und eine dem Rücken gegenüberliegende Schlüsselbrust, die unterschiedlich tiefe, kerbenförmige Einschnitte aufweist, die das Schlüsselgeheimnis repräsentieren. Die unmittelbar dem Rücken benachbart liegenden Nuten bzw. Rippen üben eine Führungsfunktion aus, um den Schlüssel im Schlüsselkanal des Schließzylinders zu führen. Der Schlüsselkanal bildet komplementäre Nuten bzw. Rippen aus, so dass in diesem Bereich Nuten und Rippen des Schlüssels bzw. der Wandung des Schlüsselkanals führend ineinander greifen. Der die Einschnitte aufweisende Abschnitt des Schlüsselschaftes ist ebenfalls mit Rippen und Nuten versehen, die unterschiedliche Rippenhöhen bzw. Nuttiefen aufweisen können, um so Schlüssel bzw. Schließsysteme zu individualisieren. Über diese Variierungsnuten werden üblicherweise Schließhierarchien aufgebaut. Es ist aber auch möglich, dass Schließhierarchien durch unterschiedliche Profilierungen, also Rippenhöhen bzw. Nuttiefen der Führungsnuten aufgebaut werden. Im Wesentlichen unterscheiden sich Führungsnuten und Variierungsnuten lediglich dadurch, dass die Variierungsnuten im Bereich der brustseitigen Einschnitte liegen, also in Längsrichtung des Schlüsselschaftes bereichsweise durch Schnittkanten unterbrochen sind.

Ein gattungsgemäßes Verfahren zur Fertigung eines derartigen Schlüssels zeigt die DE 10 2007 057 407 A1. Der Schlüsselrohling wird dort zwischen zwei Spannbacken eingespannt, so dass eine der beiden Breitseiten freiliegt. Die Profilierung der Breitseiten erfolgt mittels eines Fräsers, der auf seiner Umfangsfläche Fräszähne aufweist, die ein zu den erzeugenden Profilnuten bzw. Profilrippen des Schlüsselschaftes komplementäres Profil besitzen. Der Schlüssel wird in Erstreckungsrichtung des Schaftes vorgeschoben. Die Achsen der von einem Elektromotor drehangetriebenen Fräser verlaufen parallel zur Schlüsselbreitseitenebene. Dies bedeutet, dass sie senkrecht zur Flächennormalen der Breitseitenebene verlaufen.

Eine ähnliche Vorrichtung, mit der das gattungsgemäße Verfahren durchführbar ist, zeigt die DE 100 49 662 C2. Auch hier werden mittels eines Fräsers, der um eine parallel zur Schlüsselbreitseitenebene verlaufende Drehachse drehangetrieben wird, parallel zur Schlüsselerstreckungsrichtung verlaufende Nuten und Rippen gefräst. Mit diesem Verfahren können nur solche Nuten bzw. Rippen gefräst werden, deren Nutwände bzw. Rippenwände einen positiven Winkel zur Schlüsselnormalen besitzen. Die Flankenwinkel der Fräszahnrippen sind größer als 90°. Demzufolge sind auch die Flankenwinkel der Nuten größer als 90°. Üblicherweise liegt die Größe des Freiwinkels zur Senkrechten bei 3°, um schädliche Reibungen der Fräszähne an den Nutwänden zu vermeiden.

Die DE 694 21 093 T2, die einen Flachschlüssel mit den Merkmalen des Oberbegriffs des Anspruchs 7 offenbart, beschreibt die Fertigung von hinterschnittenen Profilnuten an einem Schlüsselrohling, wobei Schneidscheiben verwendet werden, die um geneigt zur Schlüsselbreitseitenebene verlaufende Drehachsen angetrieben werden.

Aus der DE 35 42 008 ist es bekannt, hinterschnittene Nuten durch Aufbringen eines Plättchens auf der Schlüsselbreitseite zu erzeugen.

Die DE 33 14 511 A1 beschreibt einen Flachschlüssel, bei dem auf den beiden sich gegenüberliegenden Breitseiten jeweils Nuten eingeschnitten sind, die eine hinterschnittene Nutwandung besitzen.

Aus der DE 10 2005 036 113 A1 ist ebenfalls ein Schlüsselprofil bekannt, bei dem Nutwände der Profilnuten hinterschnitten sind. Auch hier müssen die hinterschnittenen Nuten in einem gesonderten Arbeitsgang mit Hilfe von schräggestellten Schneidscheiben gefräst werden.

Der Erfindung liegt die Aufgabe zugrunde, ein Verfahren zur Fertigung von Schlüsselprofilen mit zumindest einer hinterschnittenen Nutwand anzugeben, bei dem jede Breitseite in einem einzigen Arbeitsgang profiliert wird.

Gelöst wird die Aufgabe durch die in den Ansprüchen angegebene Erfindung.

Zunächst und im Wesentlichen ist vorgesehen, dass die Fräserwellenachse zur Längsmittelebene des Schlüssels um einen Neigungswinkel geneigt ist. Dieser Neigungswinkel definiert den maximal möglichen Hinterschneidungswinkel der mindestens einen hinterschnittenen Nut. Die Rippen bzw. Nuten der Fräszähne entspringen dabei einer zumindest virtuellen Kegelstumpfmantelfläche mit einem dem Neigungswinkel entsprechenden Kegelwinkel. Diese Kegelstumpfmantelfläche liegt im Bereich des Fräszahneingriffs parallel zur Längsmittelebene bzw. Breitseitenebene des Schlüsselrohlings. Zumindest eine Nutflanke eines der Fräszähne hat einen Flankenwinkel zur Drehachse des Fräsers, der derart gering ist, dass diese Fräszahnflanke eine hinterschnittene Nutwand erzeugt. Bei dem erfindungsgemäßen Verfahren wird der unprofilierte Schlüssel zunächst zwischen zwei Spannbacken eingespannt, so dass eine der beiden zueinander parallelen Breitseiten des Schlüsselrohlings freiliegt. Die andere Breitseite des Schlüsselrohlings stützt sich auf einer Stützfläche, die zwischen den beiden Spannbacken liegt, ab. Bevorzugt greifen die Spannbacken an den beiden sich gegenüberliegenden Längsschmalseiten des Schlüsselschaftes, also an Brust und Rücken des Rohlings, an. Die Drehachse des Fräsers, mit dem die erste Breitseite des Schlüsselrohlings profiliert wird, verläuft geneigt zur Schlüsselbreitseite. Aus der im Wesentlichen auf einer Kegelmantelfläche verlaufenden Umfangsfläche des Fräskopfes ragen die Fräsrippen von den Fräszähnen ab. Durch eine Zustellung des Fräskopfes quer zur Fräserachse werden die Fräszähne in Eingriff in die zu bearbeitende Breitseite des Schlüsselrohlings gebracht. Anschließend wird entweder der Fräskopf oder der Schlüsselrohling in Richtung der Schlüssellängsachse vorgeschoben, so dass in einem Arbeitsgang eine Breitseitenfläche des Schlüsselrohlings bearbeitet wird. Nach diesem ersten Bearbeitungsschritt wird der Schlüssel bspw. mit Hilfe eines Greifarmes aus der Spannvorrichtung genommen und in eine zweite Spannvorrichtung eingelegt, in der diesmal die bereits profilierte Breitseitenfläche des Schlüsselschaftes zur Stützfläche der Spannvorrichtung weist, so dass die zweite, bislang nicht profilierte Schlüsselbreitseite freiliegt. Diese wird nun in gleicher Weise mit einem zweiten Fräskopf gefräst, wobei sich auch hier hinterschnittene Nutwände im Schlüsselschaft ausbilden können. Die Fräserwelle dieses zweiten Fräsers ist bevorzugt um denselben Winkel zur Breitseitenebene des Rohlings geneigt. Anschließend werden in die Schlüsselbrust die das Schließgeheimnis des Schlüssels repräsentierenden Codierungskerben eingeschnitten, wobei sich diese Kerben nur über den von Variierungsnuten bzw. Variierungsrippen aufweisenden Bereich des Schlüsselschaftes erstrecken. Bevorzugt besitzt mindestens eine der Führungsnuten eine hinterschnittene Nutwand. Die Variierungsnuten sind bevorzugt hinterschneidungsfrei, so dass scharfe Kanten im Bereich der Einschnittflanken der Codierungskerben vermieden werden. Der Schlüsselschaft besitzt bevorzugt zumindest zwei parazentrische Nutpaare. Es gibt eine Längsebene durch den Schlüsselschaft, die durch jeweils eine Nut der beiden Breitseiten verläuft. Dies hat zur Folge, dass entsprechende, von den Wänden des Schlüsselkanals des Schließzylinders abragende Rippen sich überlappen. Der Neigungswinkel, den die Fräserwelle gegenüber einer Breitseitenebene besitzt, liegt bevorzugt zwischen 5° und 50°. Besonders bevorzugt liegt dieser Winkel zwischen 10° und 40°. Bevorzugt werden beide Breitseiten mit Fräsern bearbeitet, deren Achsen geneigt zur Schlüsselmittelebene verlaufen. Bevorzugt handelt es sich dabei um gleiche Neigungswinkel. Eine Trockenbearbeitung der Profile des Schlüssels ist möglich, wenn die Flankenwinkel der Fräszahnrippen Winkel aufweisen, die größer als 90°, bevorzugt größer als 92°, sind.

Die nach dem zuvor beschriebenen Verfahren gefertigten Flachschlüssel besitzen zumindest eine hinterschnittene Nut. Bevorzugt verläuft in jeder der beiden Breitseiten eine Nut, die eine hinterschnittene Nutwand aufweist.

Alle im Bereich brustseitiger Codierungseinschnitte liegende Variierungsnuten weisen hinterschneidungsfreie Wandungen auf.

Die beiden Nutflanken jeder Profilnut des Schlüssels konvergieren in Richtung zum Nutgrund. Die beiden Flanken jeder Profilrippe des Schlüssels divergieren in Richtung zum Nutgrund. In einer Weiterbildung der Erfindung ist vorgesehen, dass die Fräser derart profiliert sind, dass sie Breitseitenabschnitte des Schlüsselschaftes derart bearbeiten, dass ihre Oberfläche auf einem Abschnitt einer Zylindermantelfläche liegt. Es kann sich dabei um eine Zylindermantelaußenfläche oder um eine Zylindermantelinnenfläche handeln. Diese gekrümmt verlaufenden Abschnitte des Schlüsselschaftes sind dem Bereich des Schlüsselschaftes zugeordnet, in dem auch die Codiereinschnitte liegen. Einem positiv gekrümmten Abschnitt kann ein negativ gekrümmter Abschnitt gegenüberliegen. Die zugehörige Zylinderaußenmantelwand gehört zu einem Zylinder, der koaxial liegt zu dem den Abschnitt einer Zylinderinnenmantelfläche erzeugenden Zylinder der gegenüberliegenden Seite.

In einer bevorzugten Weiterbildung des Flachschlüssels ist vorgesehen, dass jeweils einer Breitseite zugeordnete Nuten zu einer ersten Schlüsselschmalseite weisende erste Nutwände aufweisen, die einen ersten Flankenwinkel zur Schlüsselmittelebene bzw. Schlüsselbreitseitenebene und zu einer zweiten Schlüsselschmalseite weisende zweite Nutwände aufweisen, die einen zweiten Flankenwinkel besitzen. Bei einem derartigen Schlüsselprofil ist vorgesehen, dass zumindest ein erster Flankenwinkel einer, bevorzugt jeder Breitseite kleiner als 90° ist. Mindestens ein weiterer erster Flankenwinkel soll aber größer als 90° sein. Die Summe der beiden Flankenwinkel ist größer als 90° und kann insbesondere mindestens 93° betragen. Die ersten Flankenwinkel beschränken sich auf einen Bereich, der zwischen einem Neigungswinkel ϕ und ϕ +90° liegt. Der Neigungswinkel ϕ ist kleiner als 90°. Die hinterschnittenen Flankenwinkel, die kleiner als 90° sind, beschränken sich auf den Bereich der Führungsnuten. Alle Flankenwinkel im Bereich der Profilnuten sind größer als 90°.

Die Erfindung betrifft darüber hinaus einen Schließzylinder mit dem erfinderischen Flachschlüssel und mit einer von einem Verschleißschutzstift gebildeten ergänzenden Zuhaltung, wobei diese Zuhaltung beim Einstecken des Schlüssels von einer Blockierstellung in eine Freigabestellung verlagert wird. Der Verschleißschutzstift wird bevorzugt von der Rippe des Schlüssels beaufschlagt. Hierzu kann eine Auflaufschräge vorgesehen sein. Zur Steuerung des Verschleißschutzstiftes von seiner Blockierstellung in seine Freigabestellung eignet sich insbesondere eine hinterschnitte Wandung einer Führungsrippe bzw. hinterschnittene Wandung einer Führungsnut. Der Verschleißschutzstift ist aus einem härteren Material gefertigt und besteht vorzugsweise aus einem Hartmetallplättchen. Dieses steckt in einer Aufnahmeöffnung des Zylinderkernes ein. Ihm liegt bevorzugt ein weiterer Verschleißschutzstift gegenüber. Der Verschleißschutzstift ist in einer Parallelebene zur Schlüsselmittelebene beweglich und wird von einer Feder in die Sperrstellung beaufschlagt. Er besitzt eine Ausnehmung, in die die seitlich vorstehende Betätigungsrippe des Schlüsselschaftes eingreifen kann. Der Spitzenabschnitt dieser Betätigungsrippe läuft beim Einschieben der Schlüsselspitze in den Schlüsselkanal auf einer Auflaufschräge auf, um den als Sperrstift ausgebildeten Verschleißschutzstift in seine Freigabestellung zu verlagern. Der Schließzylinder kann darüber hinaus weitere Ergänzungszuhaltungselemente aufweisen, die auch durch Schwenken von einer Blockierstellung in eine Freigabestellung verlagert werden können.
Ein Ausführungsbeispiel der Erfindung wird nachfolgend anhand beigefügter Zeichnungen erläutert. Es zeigen:
- Fig. 1: grobschematisch die räumliche Anordnung eines eingespannten Schlüsselrohlings in Bezug auf den eine Breitseite 3 bearbeitenden Fräser 8,
- Fig. 2: eine vergrößerte Darstellung, die schematisch den beidseitig bearbeiteten Schlüsselrohling 1 und die beiden die Breitseitenprofile bearbeitenden Fräszähne 11, 11' zeigt,
- Fig. 3: eine Darstellung gemäß Fig. 2, jedoch mit im Eingriff dargestellten Fräszähnen,
- Fig. 4a: den Fräsereingriff beim Fräsen der ersten Schlüsselbreitseite,
- Fig. 4b: den Fräsereingriff beim Fräsen der zweiten Schlüsselbreitseite,
- Fig. 5: das fertige Schlüsselprofil,
- Fig. 6: einen Schließzylinder mit darin eingestecktem Schlüssel,
- Fig. 7: einen Schnitt gemäß der Linie VII - VII in Fig. 6 bei nicht eingestecktem Schlüssel,
- Fig. 8: einen Schnitt gemäß der Linie VIII - VIII in Fig. 7,
- Fig. 9: eine Darstellung gemäß Fig. 7 mit eingestecktem Schlüssel,
- Fig. 10: eine Darstellung gemäß Fig. 8 mit eingestecktem Schlüssel,
- Fig. 11: einen Schnitt gemäß der Linie XI - XI in Fig. 6,
- Fig. 12: einen Schnitt gemäß der Linie XII - XII in Fig. 11,
- Fig. 13: die Breitseitenansicht auf einen Flachschlüssel,
- Fig. 14: einen Schnitt gemäß der Linie XIV - XIV in Fig. 13 zur Verdeutlichung der Flankenwinkel.

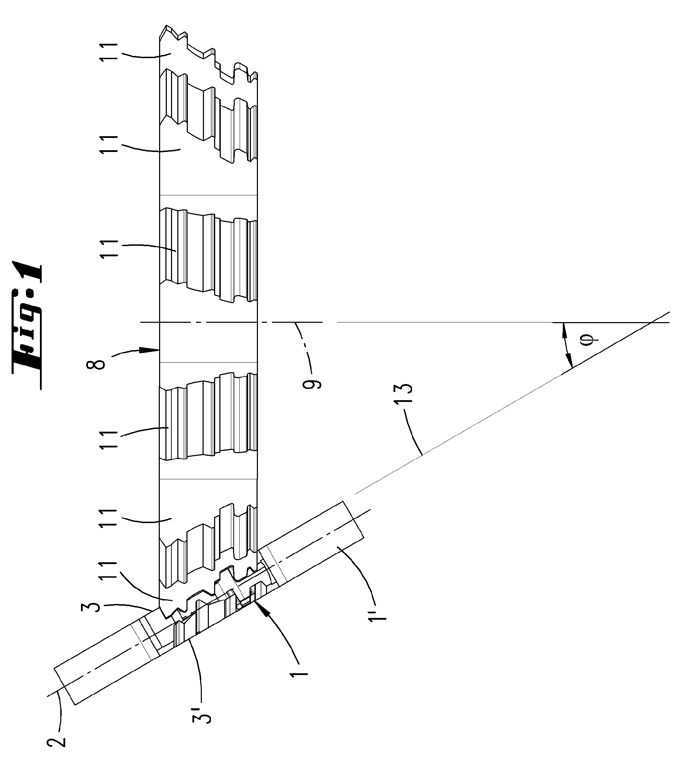

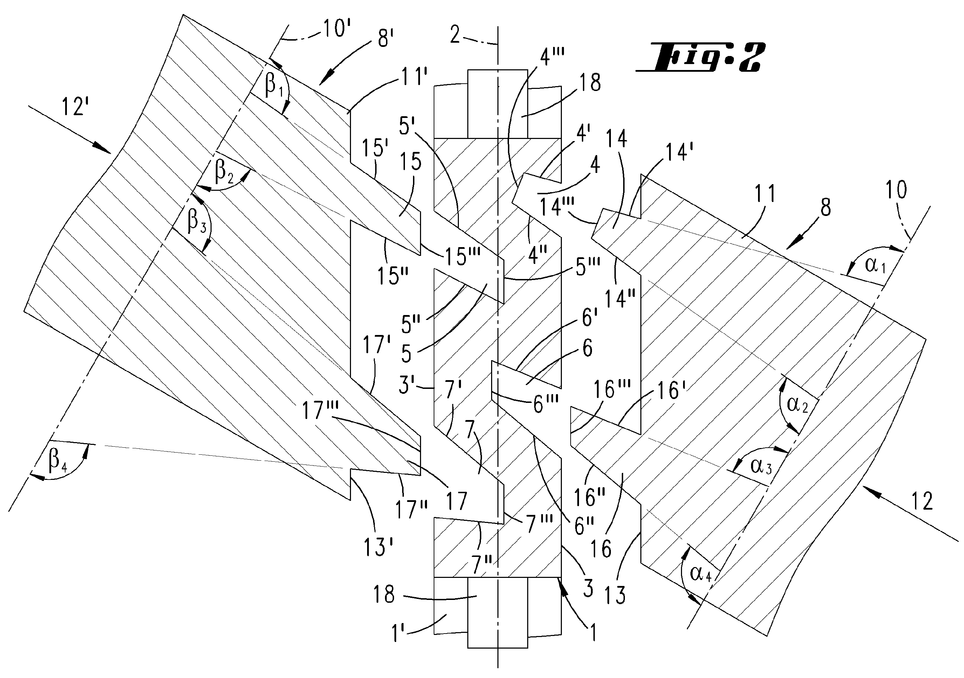

Die Fig. 1 zeigt die räumliche Beziehung zwischen dem Schlüsselrohling 1 und dem Fräser 8. Der Schlüsselrohling, der einen Schlüsselschaft mit parallelen Breitseiten 3, 3' und eine Reide 1' aufweist, ist mit nicht dargestellten Spannmitteln, bspw. mit den beiden in der Fig. 2 angedeuteten Spannbacken 18 in einer Spannvorrichtung gehalten. Die beiden Schlüsselbreitseitenebenen 3, 3', die parallel zur Längsmittelebene 2 des Schlüsselrohlings verlaufen, definieren eine Bezugsebene. Die Wellenachse 9, um die ein Profilfräser 8 gedreht wird, ist um einen Winkel ϕ zur Längsmittelebene 2 des Schlüsselrohlings 1 geneigt. Beim Ausführungsbeispiel liegt der Neigungswinkel ϕ bei etwa 30°.

Der Fräser 8 besitzt eine Umfangsfläche, die im Wesentlichen auf einer Kegelmantelfläche 13 verläuft, wobei der Kegelöffnungswinkel dem Neigungswinkel ϕ entspricht. Dies hat zur Folge, dass eine durch die Kegelmantelfläche 13 im Bereich des Zahneingriffs in die Breitseitenebene des Schlüsselrohlings 1 gezogene Linie parallel zur Schlüsselrohlingsbreitseitenebene verläuft. Auf seiner Umfangsfläche besitzt der Fräser 8 eine Vielzahl von Fräszähnen 11, die Fräszahnrippen und Fräszahnnuten aufweisen, die ein komplementäres Profil zu den zu erzeugenden Führungsnuten 4, 5 bzw. Variierungsnuten 6, 7 des Schlüssels aufweisen.

Zur Profilierung einer der beiden voneinander wegweisenden Breitseiten 3, 3' des Schlüsselrohlings wird der um die Wellenachse 9 drehangetriebene Fräser 8 zugestellt. In der Darstellung gemäß Fig. 1 entspricht die Zustellrichtung einer Verlagerung des Fräsers 8 senkrecht zur Wellenachse 9 nach links. Anschließend wird entweder der Fräser 8 oder der Schlüsselrohling 1 bzw. die den Schlüsselrohling 1 fesselnde Spannvorrichtung in Erstreckungsrichtung des Schlüsselschaftes verlagert. In der Darstellung gemäß Fig. 1 erfolgt diese Verlagerung senkrecht zur Papierebene.

Die Fig. 2 zeigt schematisch in einer direkten Gegenüberstellung den Querschnitt durch einen Fräser 8, der die Schlüsselbreitseite 3 profiliert und den Querschnitt eines Fräsers 8', der die gegenüberliegende Schlüsselbreitseitenfläche 3' profiliert. Angedeutet sind in Fig. 2 auch zwei Spannbacken 18, die Schlüsselbrust und Schlüsselrücken zwischen sich einspannen.

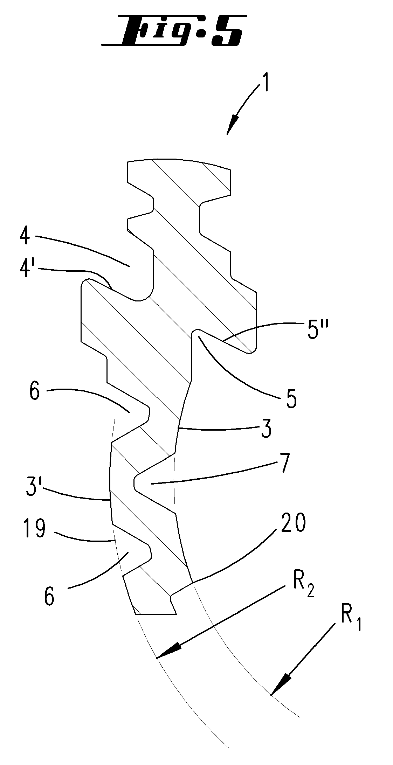

Der Fräser 8 besitzt eine Vielzahl von Fräszähnen 11, von denen lediglich einer im Querschnitt dargestellt ist. Der Einfachheit halber ist der Fräszahn 11 mit nur einer Fräszahnrippe 14 zur Fertigung einer Führungsnut 4 und einer Fräszahnrippe 16 zur Fertigung einer Variierungsnut 6 dargestellt. Beide Rippen 14, 16 entspringen hier einer Kegelmantelfläche 13. Bei der Kegelmantelfläche 13 kann es sich um eine gedachte Ebene handeln. Zur Fertigung komplexerer Schlüsselprofile, wie bspw. die Fig. 5 zeigt, werden Fräser 8 verwendet, bei denen die Kegelmantelfläche 13 nicht körperlich ausgebildet ist.

Der Fräser 8' ist ebenfalls nur mit zwei Rippen 15, 17 dargestellt, wobei die Rippe 15 eine Führungsnut 5 und die Rippe 17 eine Variierungsnut 7 fräst. Auch hier entspringen beide Fräszahnrippen 15,17 einer körperlich ausgebildeten Kegelmantelfläche 13'.

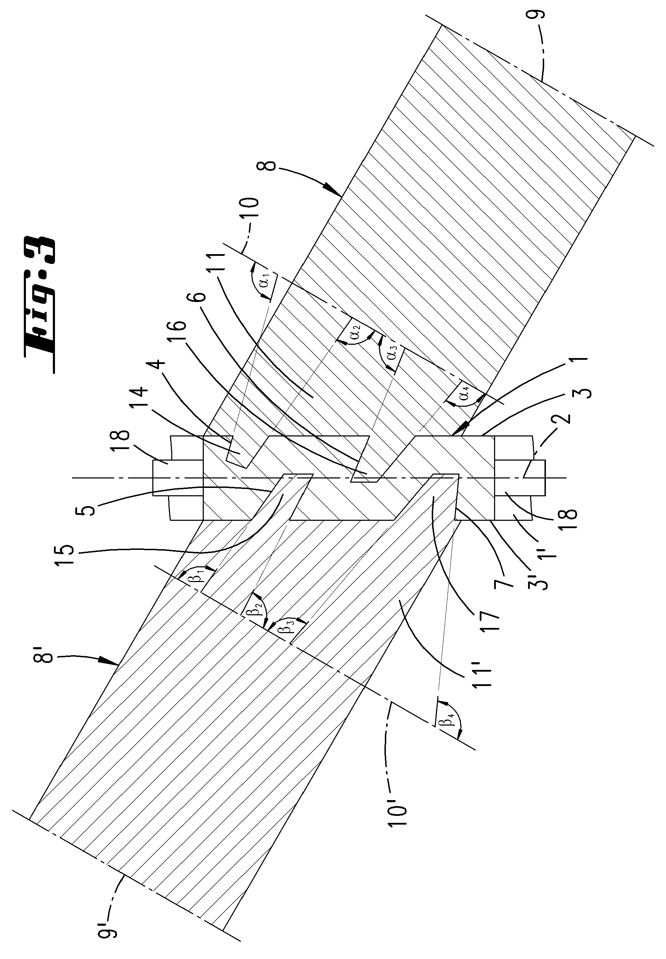

Die Hilfslinien 10,10' verlaufen parallel zu den in der Fig. 2 nicht dargestellten Wellenachsen 9, die aber in der Fig. 3 dargestellt sind. Die Hilfslinien 10, 10' dienen der Verdeutlichung der Flankenwinkel α₁ bis α₄ und β₁ bis β₄ der Flankenwinkel 14',14", 15', 15",17', 17",16', 16" der Fräszahnrippen 14,15,16,17.

Die Fräszahnrippe 14 besitzt zwei in einem spitzen Winkel aufeinander zulaufende Fräsflanken 14',14" und eine geneigt verlaufende Fräszahnkopflinie 14"'. Die Winkel α₁, α₂, mit denen die Fräszahnflanken 14',14" zur Wellenachse 9 bzw. zur Hilfslinie 10 geneigt sind, sind größer als 90°. Aus der Fig. 2 ist aber zu entnehmen, dass die von der Fräszahnflanke 14' erzeugte Nutwandung 4' der Führungsnut 4 eine hinterschnittene Nut ist. Der Fräszahn 8 wird in die mit der Bezugsziffer 12 bezeichneten Zustellrichtung zugestellt. Mit der Fräszahnflanke 14" wird eine flachauslaufende Nutflanke 4" erzeugt.

Mit der Fräszahnrippe 15 des Fräsers 8' wird eine ähnliche, ebenfalls hinterschnittene Führungsnut 5 gefräst. Auch hier sind die Flankenwinkel β₁, β₂, die die Fräszahnflanken 15',15" zur Drehachse bzw. zur Hilfslinie 10 einnehmen, größer als 90°. Die Kopflinie 15"' verläuft hier parallel zur Längsmittelebene 2, so dass sich ein parallel zur Längsmittelebene 2 verlaufender Nutgrund 5'" ergibt.

Mit der Fräserzahnrippe 16 des Fräsers 8 wird eine Variierungsnut 6 gefräst. Die Kopflinie 16'" der Fräszahnrippe 16 verläuft hier in einem derartigen Winkel zur Drehachse 9, dass ein parallel zur Längsmittelebene 2 verlaufender Nutgrund 6'" erzeugt wird. Die beiden Nuten 6, 5 sind parazentrisch zueinander, da die Längsmittelebene 2 sowohl durch die Nut 5 als auch durch die Nut 6 der gegen-überliegenden Breitseite verläuft.

Die Nut 6 ist ebenfalls parazentrisch zu der der gegenüberliegenden Breitseite 3' zugeordneten Variierungsnut 7, die ebenfalls einen parallel zur Längsmittelebene 2 verlaufenden Nutgrund 7"' aufweist. Die Nutwände 6' und 6" der Variierungsnut 6 können ebenso wie die Nutwände 7', 7" der Variierungsnut 7 hinterschneidungsfrei sein. Entsprechend groß sind dann die Flankenwinkel α₃, α₄ der Flanken 16', 16" gegenüber der Hilfslinie 10 bzw. der Wellenachse 9. Auch die Flankenwinkel β₃ und β₄ der Flanken 17', 17" können eine derartige Größe besitzen, so dass die von den Flanken 17', 17" erzeugten Nutwände 7', 7" hinterschneidungsfrei sind.

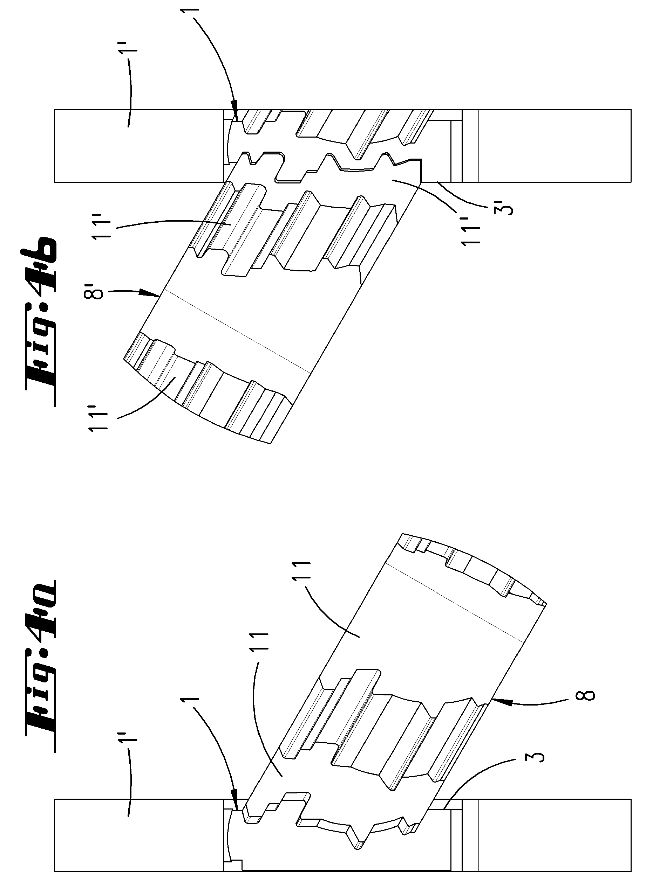

Während anhand der vorbeschriebenen Figuren 1 bis 3 lediglich schematisch das Verfahren erläutert wurde, wird anhand der folgenden Figuren 4a bis 5 ein erstes Ausführungsbeispiel zur Fertigung eines Schlüsselprofils erläutert. Der Schlüsselschaft des Schlüsselrohlings 1 ist wiederum in einer Spannvorrichtung eingespannt. Mit dem Fräser 8 wird ein entsprechendes Breitseitenprofil in die Schlüsselbreitseite 3 des Schlüsselrohlings eingearbeitet. Es ist ersichtlich, dass eine lediglich eine einzige Nutwand 5" aufweisende Führungsnut 5 hinterschnitten ist, da die einzige Nutwandung 5" dieser Führungsnut 5 einen negativen Winkel zur Flächennormalen der Schlüsselbreitseite aufweist.

Im Bereich der Variierungsnut 7 verläuft die fertiggefräste Schlüsselschaftbreitseite entlang einer Zylindermantelinnenfläche, wobei der diese Zylindermantelinnenfläche erzeugende Zylinder einen Radius R₁ aufweist. Diesem, gekrümmten Breitseitenabschnitt 20 liegt ein ebenfalls gekrümmter Breitseitenabschnitt 19 gegenüber. Der Breitseitenabschnitt 19 verläuft auf einem Abschnitt einer Zylinderaußenmantelwand mit einem Radius R₂. R₁ und R₂ gehen vom selben Mittelpunkt aus. In dem gekrümmten Breitseitenabschnitt 19 liegen zwei Variierungsnuten 6.

Der die Breitseitenebene 3' bearbeitende Fräser 8' besitzt eine Querschnittskonturlinie des Fräszahnes 11', der eine entsprechende Rundung aufweist, um den Zylinderflächenabschnitt 19 zu fräsen. Aus einer auf einer gedachten Kegelmantelfläche verlaufenden Grundfläche ragen Fräsrippen zur Fertigung der Führungsnut 4 und der beiden Variierungsnuten 6. Der die Führungsnut 4 erzeugende Abschnitt des Fräszahnes ist so ausgebildet, dass die Führungsnut 4 eine hinterschnittene Nutflanke 4' besitzt.

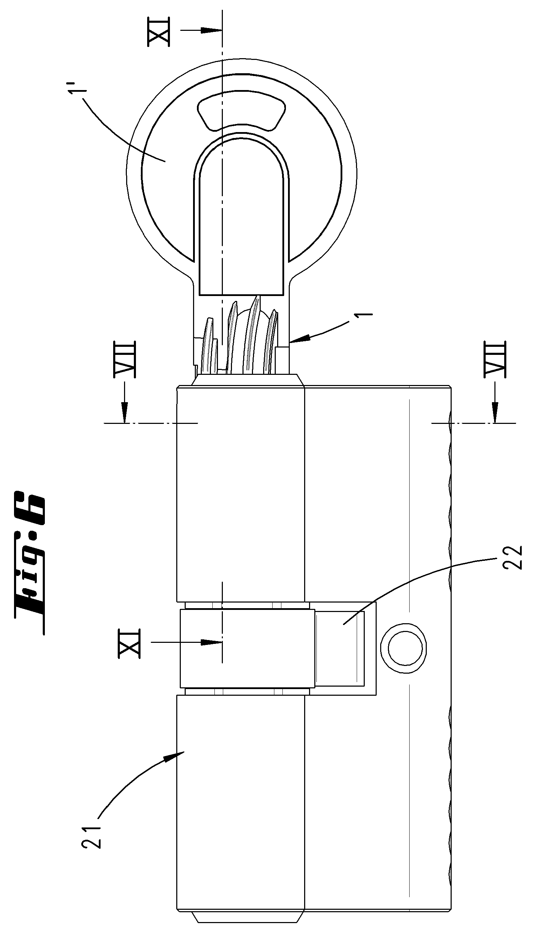

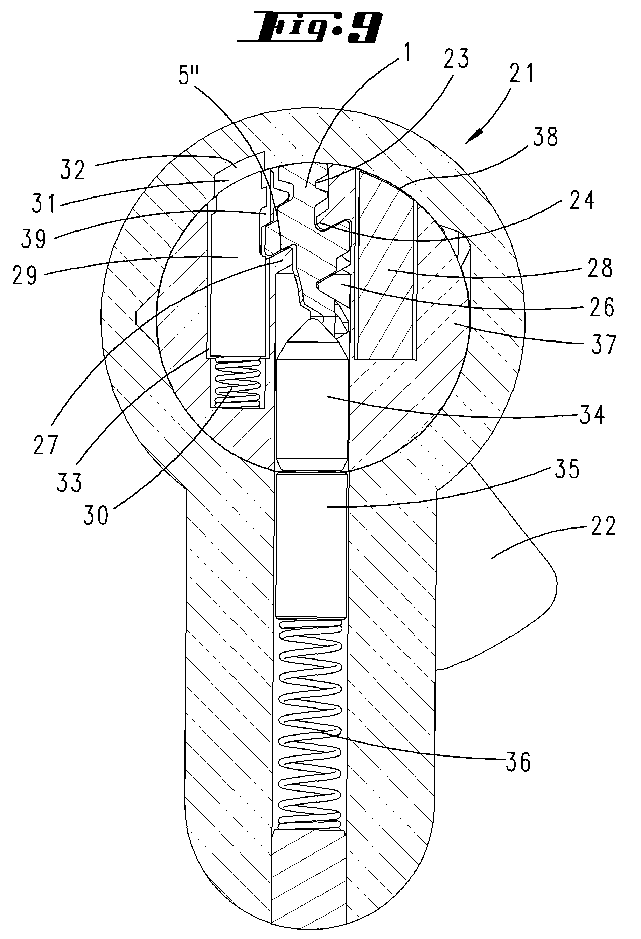

Die Fig. 6 zeigt einen Schließzylinder 21, der als Doppelschließzylinder ausgebildet ist. Ein Schließglied 22 kann mit einem der beiden jeweils in einer Höhlung des Gehäuses des Schließzylinders 21 drehbar einliegenden Zylinderkernen gedreht werden, wenn der passende Schlüssel 1 in den diesbezüglichen Schlüsselkanal 23 eingesteckt ist. Im Profilabschnitt des Zylindergehäuses stützt sich auf dem Boden einer Stiftbohrung eine Stiftfeder 36 ab, die einen Gehäusestift 35 in eine Sperrstellung beaufschlagt. In der Stiftbohrung steckt darüber hinaus ein Kernstift 34. Es sind insgesamt eine Vielzahl derartiger Stiftzuhaltungen 34, 35 vorgesehen, die jeweils von den Codierungseinschnitten des Schlüssels 1 in ihre Freigabestellung (Fig. 9) einsortiert werden können, in welcher der Zylinderkern 37 gedreht werden kann.

In einer nahe der Mündung des Schlüsselkanals 23 angeordneten Aussparung steckt ein Hartmetallplättchen 28, welches einen Verschleißschutzstift ausbildet.

Auf der gegenüberliegenden Seite des Schlüsselkanals 23 befindet sich eine gleich gestaltete Lageröffnung 33, die sich parallel zur Schlüsselbreitseite des in den Schlüsselkanal 23 eingesteckten Schlüssels erstreckt. In dieser Lageröffnung 33 ist ein weiterer Verschleißschutzstift 29 verschiebbar gelagert. Derartige Verschleißschutzstifte sind aus der DE 10 2007 007 688 A1 bekannt. Hinsichtlich der Funktionsweise dieser Verschleißschutzstifte 28, 29 wird deshalb auf diese veröffentlichte Schrift verwiesen.

Der bewegliche Verschleißschutzstift 29 besitzt eine Ausnehmung 39, in die eine Profilrippe des Schlüssels eingreifen kann. Es handelt sich dabei um eine Profilrippe, deren Rippenwand von der hinterschnittenen Wandung 5" der Führungsnut 5 gebildet ist.

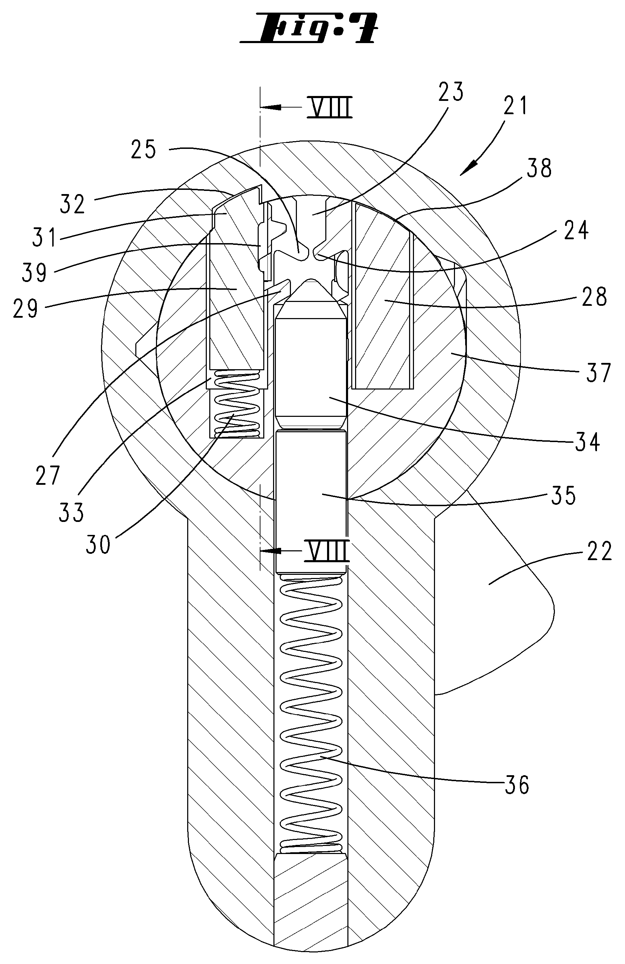

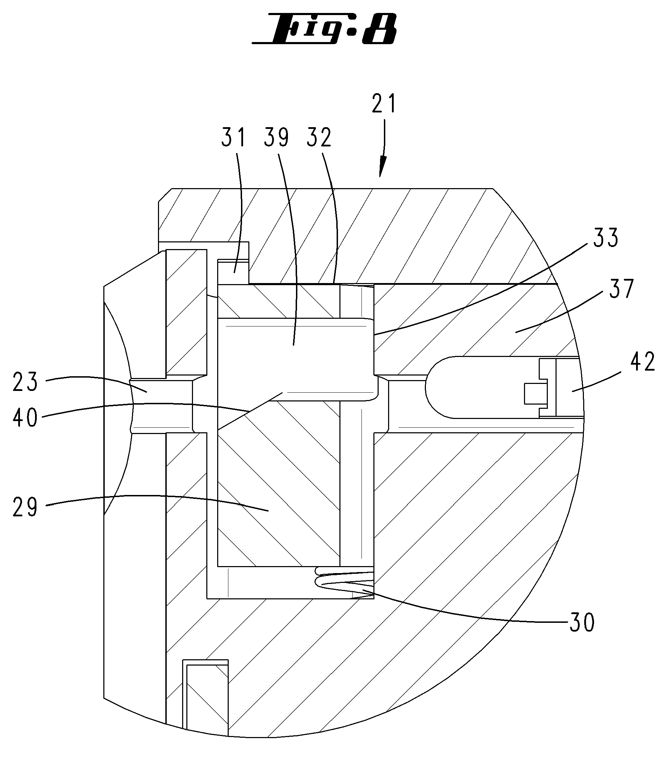

Der Fig. 8 ist zu entnehmen, dass sich die Ausnehmung 39 in zur Mündung des Schlüsselkanals 23 unter Ausbildung einer Auflaufschräge 40 vergrößert. Bei nicht eingeschobenem Schlüssel 1 ragt ein querschnittsverminderter Sperrfortsatz 31 des Verschleißschutzstiftes 29 in eine Sperrausnehmung 32 des Zylindergehäuses. Die Feder 30 beaufschlagt den Verschleißschutzstift 29 in die diesbezügliche Richtung (siehe Fig. 7).

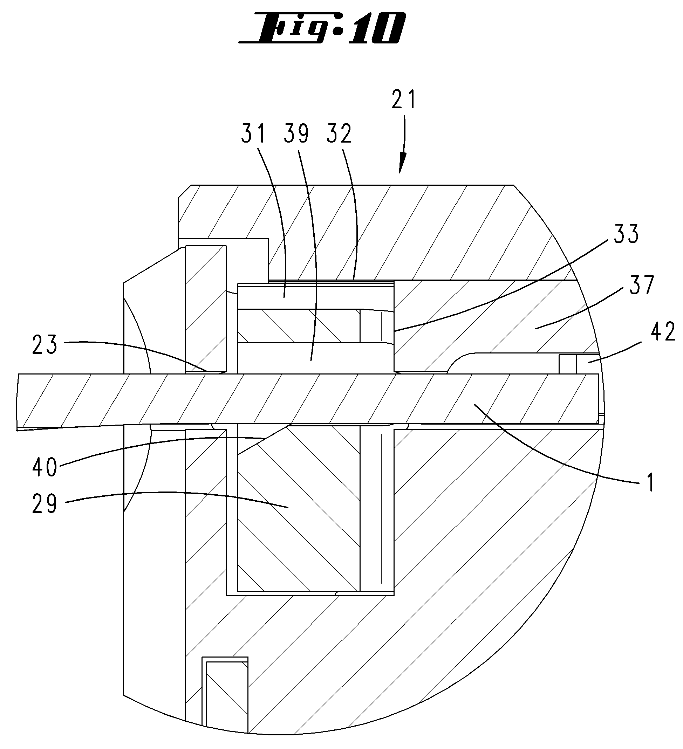

Wird ein Schlüssel 1 in den Schlüsselkanal 23 hineingeschoben, so gleitet ein vorderer Abschnitt der Nutwandung 5" auf der Auflaufschräge 40 auf und verlagert den Verschleißschutzstift 29 in die in Fig. 9 dargestellte Position. Dabei verschiebt sich der Verschleißschutzstift 29 entgegen der Rückstellkraft der Feder 30, so dass sein Sperrfortsatz 31 aus der Sperrausnehmung 32 austritt. Bei vollständig eingeschobenem Schlüssel wird der Verschleißschutzstift 29 von der die Flanke 5" ausbildenden Betätigungsrippe in der in Fig. 10 dargestellten Freigabestellung gehalten.

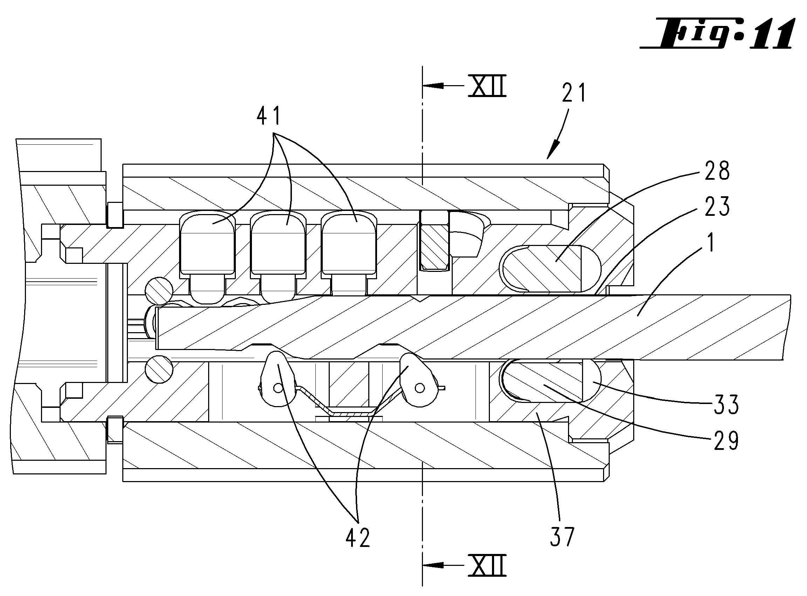

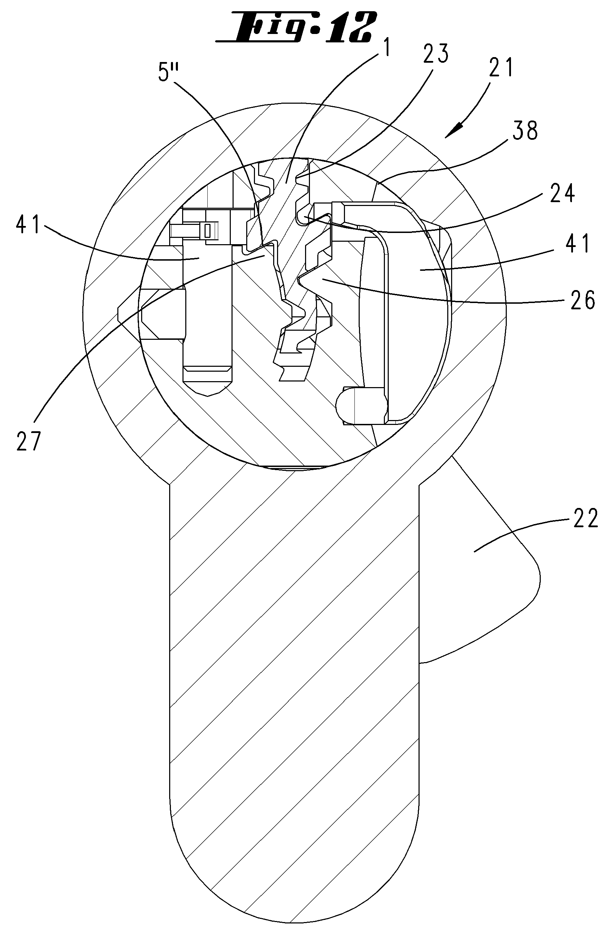

Die Figuren 11 und 12 zeigen weitere Zuhaltungselemente, mit denen der in einer Kernbohrung 38 liegende Zylinderkern 37 bei nicht eingestecktem Schlüssel gegen ein Verdrehen geschützt ist. Die Ergänzungszuhaltungsstifte 41 können um eine parallel zur Drehachse des Zylinderkerns 37 verlaufende Schwenkachse zwischen einer Blockierstellung und einer Freigabestellung hin- und hergeschwenkt werden. Die Ergänzungszuhaltungen 41 besitzen Tastköpfe, mit denen ein Profil des Schlüsselschaftes abgetastet wird.

Es sind ferner Schwenkstifte 42 vorgesehen, die ebenfalls Tastköpfe aufweisen, die Breitseitenprofilierungen des Schlüsselschaftes abtasten, um ein Sperrende von einer Blockierstellung in eine Freigabestellung zu verlagen.

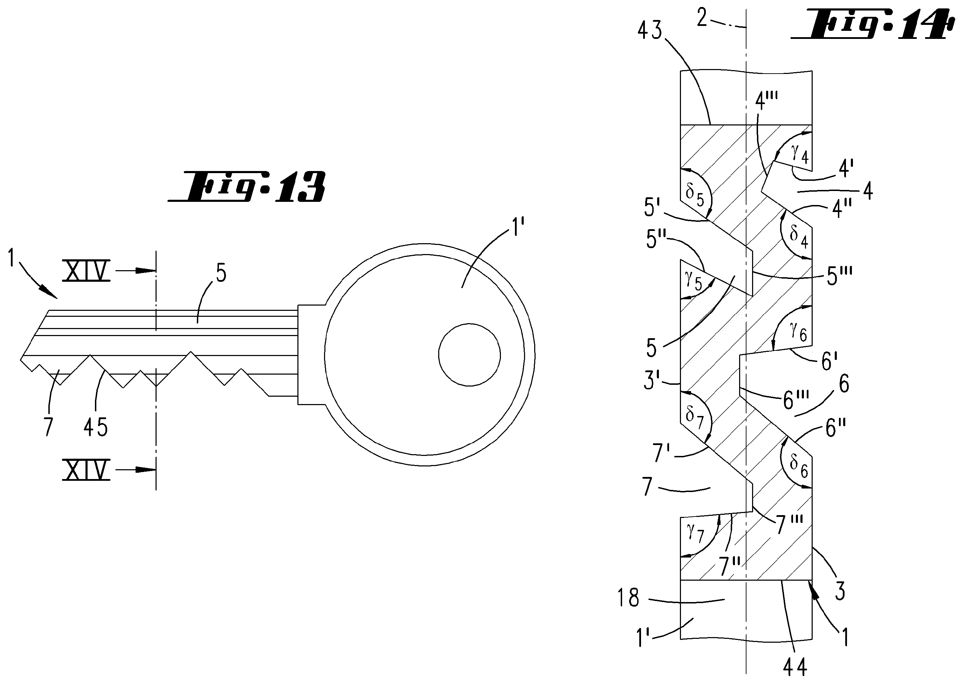

Die Fig. 13 zeigt die Breitseitenansicht eines Flachschlüssels eines bevorzugten Ausführungsbeispiels der Erfindung. Die Fig. 14 zeigt einen Schnitt durch den Schlüsselschaft und insbesondere die Flankenwinkel der in die Schlüsselbreitseiten 3, 3' eingeschnittenen Nuten 4, 5, 6, 7. Betreffend die Schlüsselbreitseite 3 bildet die Schlüsselschmalseite 43 eine erste Schlüsselschmalseite aus, zu welcher erste Nutflanken 4', 6' weisen. Der Flankenwinkel γ₄ der Nutflanke 4' ist kleiner als 90°. Der Flankenwinkel γ₆ der Nutflanke 6' ist größer als 90°. Beide Flankenwinkel γ₄, γ₆ sind größer als ein Neigungswinkel ϕ und können einen Maximalwert haben, der maximal 90° größer ist als der Neigungswinkel ϕ.

Auch die gegenüberliegende Schlüsselbreitseite 3' besitzt derartige erste Nutflanken 5", 7". Hier bildet die zur Schlüsselschmalseite 43 gegenüberliegende Schlüsselschmalseite 44 eine erste Schmalseite aus, zu welcher mindestens eine hinterschnittene Nutflanke 5" weist. Die Nutflanke 7" der Nut 7 besitzt einen Flankenwinkel γ₇, der größer ist als 90°.

Die den jeweiligen ersten Nutflanken 4', 6', 5", 7" gegenüberliegenden Nutflanken 4", 6", 5', 7' haben einen größeren Flankenwinkel δ₄, δ₅, δ₆, δ₇. Diese zweiten Flankenwinkel bilden mit den jeweiligen ersten Flankenwinkeln δ₄, δ₅, δ₆, δ₇ eine Summe, die größer ist als 180°.
Aus der Fig. 13 geht hervor, dass die Nuten 6, 7, deren Flankenwinkel γ₆, δ₆, γ₇, δ₇ jeweils größer sind als 90°, Variierungsnuten bilden. Diese Nuten 6, 7 liegen in einem Bereich, in dem brustseitige Codierungsaussparungen 45 eingefräst sind. Die Schlüsselbrust wird hier von der Schlüsselschmalseite 44 ausgebildet. Die der Schlüsselbrust 44 gegenüberliegende Schlüsselschmalseite 43 bildet einen Schlüsselrücken, dem Führungsnuten 4, 5 benachbart sind. Die beiden Führungsnuten 4, 5 haben jeweils genau eine Nutflanke 4', 5" mit einem Flankenwinkel γ₄, γ₅, der kleiner als 90° ist. Beide Führungsnuten 4, 5 sind einseitig hinterschnitten. Alle Variierungsnuten 6, 7 sind hingegen nicht hinterschnitten, sondern besitzen Nutflankenwinkel γ₆, δ₆, γ₇, δ₇, die größer als 90°, bevorzugt größer als 93° sind.

### Bezugszeichenliste

- 1: Schlüsselrohling
- 1': Reide
- 2: Längsmittelebene
- 3: Breitseitenfläche
- 3': Breitseitenfläche
- 4: Führungsnut
- 4': Nutflanke
- 4": Nutflanke
- 5: Führungsnut
- 5': Nutflanke
- 5": Nutwand, Nutflanke
- 5"': Nutgrund
- 6: Variierungsnut
- 6': Nutwand, Nutflanke
- 6": Nutwand, Nutflanke
- 6"': Nutgrund
- 7: Variierungsnut
- 7': Nutwand, Nutflanke
- 7": Nutwand, Nutflanke
- 7"': Nutgrund
- 8: Fräser
- 8': Fräser
- 9: Wellenachse
- 10: Hilfslinie parallel zur Wellenachse
- 11: Fräszahn
- 12: Zustellrichtung
- 13: Kegelmantelfläche
- 13': Kegelmantelfläche
- 14: Fräszahnrippe
- 14': Fräszahnflanke
- 14": Fräszahnflanke
- 14"': Fräszahnkopflinie
- 15: Fräszahnrippe
- 15': Fräszahnflanke
- 15": Fräszahnflanke
- 15"': Fräszahnkopflinie
- 16: Fräszahnrippe
- 16': Fräszahnflanke
- 16": Fräszahnflanke
- 16"': Fräszahnkopflinie
- 17: Fräszahnrippe
- 17': Fräszahnflanke
- 17": Fräszahnflanke
- 18: Spannbacke
- 19: Zylinderflächenabschnitt
- 20: Zylinderflächenabschnitt
- 21: Schließzylinder
- 22: Schließglied
- 23: Schlüsselkanal
- 24: Profilrippe
- 25: Profilrippe
- 26: Profilrippe
- 27: Profilrippe
- 28: Verschleißschutzstift
- 29: Verschleißschutzstift
- 30: Feder
- 31: Sperrfortsatz
- 32: Sperrausnehmung
- 33: Lageröffnung
- 34: Kernstift
- 35: Gehäusestift
- 36: Stiftfeder
- 37: Zylinderkern
- 38: Kernbohrung
- 39: Ausnehmung
- 40: Auflaufschräge
- 41: Ergänzungszuhaltung
- 42: Schwenkstifte
- 43: Schlüsselschmalseite
- 44: Schlüsselschmalseite

- R₁: Radius
- R₂: Radius

- α₁: Flankenwinkel
- α₂: Flankenwinkel
- α₃: Flankenwinkel
- α₄: Flankenwinkel
- β₁: Flankenwinkel
- β₂: Flankenwinkel
- β₃: Flankenwinkel
- β₄: Flankenwinkel
- δ₄: Flankenwinkel
- δ₅: Flankenwinkel
- δ₆: Flankenwinkel
- δ₇: Flankenwinkel
- γ₄: Flankenwinkel
- γ₅: Flankenwinkel
- γ₆: Flankenwinkel
- γ₇: Flankenwinkel
- ϕ: Neigungswinkel

## Patentansprüche

1. Verfahren zum Profilieren mindestens einer Breitseite (3, 3') eines Flachschlüssels, wobei ein Schlüsselrohling (1) in einer Spannvorrichtung (18) derart eingespannt wird, dass seine Breitseite (3, 3') frei liegt, wobei mit einem sich um eine Fräserwelle drehenden, auf seiner Umfangsfläche Fräszähne (11,11') aufweisenden Fräser (8, 8') durch Vorschub in Schlüssellängsrichtung in einem Arbeitsgang zum Längsschnittprofil der Fräszähne (11,11') komplementäre Führungs- (4, 5) und Variierungsnuten (6, 7) in die Breitseite (3, 3') eingefräst werden, **dadurch gekennzeichnet, dass** die Fräserwellenachse zur Längsmittelebene (2) des Schlüssels (1) um einen Neigungswinkel (ϕ) geneigt ist, wobei die Rippen (14,15,16,17) der Fräszähne (11) mit zumindest einer Rippe (14,15) eine hinterschnittene Führungsnutwand (4', 5") erzeugen.

2. Verfahren nach Anspruch 1, **dadurch gekennzeichnet, dass** alle Variierungsnuten (6, 7) hinterschneidungsfreie Nutwände (6', 6"; 7', 7") aufweisen.

3. Verfahren nach einem der vorhergehenden Ansprüche, **gekennzeichnet durch** zumindest zwei parazentrische Nutenpaare (4, 5; 6, 7).

4. Verfahren nach einem der vorhergehenden Ansprüche, **dadurch gekennzeichnet, dass** der Neigungswinkel (ϕ) zwischen 5° und 50°, bevorzugt zwischen 10° und 40°, liegt.

5. Verfahren nach einem der vorhergehenden Ansprüche, **dadurch gekennzeichnet, dass** die beiden Breitseiten (3, 3') jeweils mit einem Fräser bearbeitet werden, deren Fräserwellenachsen (9, 9') zur Längsmittelebene (2) des Schlüssels (1) um einen, insbesondere denselben Neigungswinkel (ϕ) geneigt sind.

6. Verfahren nach einem der vorhergehenden Ansprüche, **dadurch gekennzeichnet, dass** die Flanken (14', 14", 15', 15", 16', 16", 17', 17") Flankenwinkel (α₁, α₂, α₃, α₄; β₁, β₂, β₃, β₄) zur Fräserachse (9) bzw. (10) haben, die >90°, bevorzugt >92°, sind.

7. Flachschlüssel mit Profilnuten, von denen mindestens eine eine hinterschnittene Nutwand (4', 5") aufweisende Führungsnut (4, 5) ist und alle im Bereich brustseitiger Codierungseinschnitte liegende Variierungsnuten (6, 7) hinterschneidungsfreie Wandungen (6', 6", 7', 7") aufweisen, **dadurch gekennzeichnet, dass** der Flachschlüssel nach einem der vorhergehenden Ansprüche 1 bis 6 gefertigt ist, so dass die Nutflanken jeder Profilnut (4, 5, 6, 7) zum Nutgrund hin konvergieren.

8. Flachschlüssel nach Anspruch 7, **gekennzeichnet durch** einen die Variierungsnuten (6, 7) aufweisenden Breitseitenabschnitt (19, 20), der auf einer Zylindermantelfläche (R₁, R₂) verläuft.

9. Flachschlüssel nach einem der Ansprüche 7 oder 8, **dadurch gekennzeichnet, dass** ein Breitseitenabschnitt (19) auf einer Zylinderaußenmantelfläche (R₂) verläuft und der diesem Breitseitenabschnitt (19) gegenüberliegende Breitseitenabschnitt (20) auf einer Zylindermantelinnenfläche (R₁) verläuft, wobei die beiden Zylindermantelflächen konzentrisch sind.

10. Flachschlüssel nach einem der Ansprüche 7 bis 9, wobei alle jeweils einer Schlüsselbreitseite (3,3') zugeordneten Nuten (4, 6; 5, 7) jeweils zu einer ersten Schlüsselschmalseite (43,44) weisende erste Nutwände (4', 6'; 5", 7") aufweisen, die einen ersten Flankenwinkel (γ₄, γ₆; γ₅, γ₇) zur Schlüsselmittelebene (2) bzw. Schlüsselbreitseitenebene besitzen und zu einer zweiten Schlüsselschmalseite (44, 43) weisende zweite Nutwände (4", 6"; 5', 7') aufweisen, die einen zweiten Flankenwinkel (δ₄, δ₆; δ₅, δ₇) zur Schlüsselmittelebene (2) bzw. Schlüsselbreitseitenebene besitzen, wobei zumindest ein erster Flankenwinkel (γ₄, γ₆; γ₅) einer, bevorzugt jeder Breitseite (3, 3') kleiner als 90° ist, wobei die ersten Flankenwinkel (γ₄, γ₅, γ₆, γ₇) im Bereich eines vorgegebenen Neigungswinkels ϕ und ϕ +90° und die zweiten Flankenwinkel (δ₄, δ₅, δ₆, δ₇) in einem Bereich des Neigungswinkels ϕ +90° und 180° liegen, wobei der Neigungswinkel (ϕ) zwischen 0° und 90° liegt, wobei alle im Bereich der schlüsselbrustseitigen Codierungseinschnitte (45) verlaufenden Nutwände (6', 6"; 7', 7") Flankenwinkel (γ₆, δ₆; γ₇, δ₇) aufweisen, die größer als 90° sind.

11. Schließzylinder mit einem Flachschlüssel gemäß einem der Ansprüche 7 bis 9, **gekennzeichnet durch** einen von einer Wandung, insbesondere einer hinterschnittenen Wandung (5") einer Führungsnut (5) bzw. Führungsrippe beim Einschub des Schlüssels in einen Schlüsselkanal (23) des Schließzylinders von einer Sperrstellung in eine Freigabestellung verlagerbaren Verschleißschutzstift (29).

## Claims

1. Method for profiling at least one broad side (3, 3') of a flat key, a key blank (1) being clamped in a clamping device (18) in such a way that the broad side (3, 3') of the key blank is exposed, guide grooves (4, 5) and variation grooves (6, 7), which are complementary to the longitudinal sectional profile of cutter teeth (11, 11') of a milling cutter (8, 8') that has cutter teeth (11, 11') on its peripheral surface and rotates about a cutter shaft, being milled into the broad side (3, 3') by advance in the longitudinal direction of the key, in one work operation, **characterized in that** the axis of the cutter shaft is inclined at an angle of inclination (ϕ) relative to the longitudinal centre plane (2) of the key (1), ribs (14, 15, 16, 17) of the cutter teeth (11) producing an undercut guide groove wall (4', 5") using at least one rib (14, 15).

2. Method according to Claim 1, **characterized in that** all variation grooves (6, 7) have groove walls (6', 6"; 7', 7"), which have no undercuts.

3. Method according to either of the preceding claims, **characterized by** at least two paracentric groove pairs (4, 5; 6, 7).

4. Method according to any of the preceding claims, **characterized in that** the angle of inclination (ϕ) is between 5° and 50°, preferably between 10° and 40°.

5. Method according to any of the preceding claims, **characterized in that** the two broad sides (3, 3') are each machined using a milling cutter whose cutter shaft axes (9, 9') are inclined with respect to the longitudinal centre plane (2) of the key (1) by an angle of inclination (ϕ), in particular the same angle of inclination.

6. Method according to any of the preceding claims, **characterized in that** the flanks (14', 14", 15', 15", 16', 16", 17', 17") have flank angles (α₁, α₂, α₃, α₄; β₁, β₂, β₃, β₄), respectively, relative to the cutter axis (9) or (10), which are > 90°, preferably > 92°.

7. Flat key having profile grooves, of which at least one is a guide groove (4, 5) having an undercut groove wall (4', 5"), and of which all variation grooves (6, 7) situated in the region of coding indentations on the front edge have walls (6', 6", 7', 7"), which have no undercuts, **characterized in that** the flat key is produced according any of the preceding Claims 1 to 6, so that the groove flanks of each profile groove (4, 5, 6, 7) converge in the direction of the groove base.

8. Flat key according to Claim 7, **characterized by** a broad side portion (19, 20), extending on a cylindrical lateral surface (R₁, R₂), which has the variation grooves (6, 7).

9. Flat key according to either of Claims 7 and 8, **characterized in that** a broad side portion (19) extends on an outer cylindrical lateral surface (R₂), and the broad side portion (20) situated opposite from this broad side portion (19) extends on an inner cylindrical lateral surface (R₁), the two cylindrical lateral surfaces being concentric.

10. Flat key according to any of Claims 7 to 9, wherein all grooves (4, 6; 5, 7) associated with a broad side of the key (3, 3'), have respective first groove walls (4', 6'; 5", 7"), which are each associated with a first narrow side (43, 44) of the key, the first groove walls having a first flank angle (γ₄, γ₆; γ₅, γ₇) relative to the centre plane (2) of the key, i.e., the plane of the broad side of the key, and have second groove walls (4", 6"; 5', 7'), which are associated with a second narrow side (44, 43) of the key, the second groove walls having a second flank angle (δ₄, δ₆; δ₅, δ₇) relative to the centre plane (2) of the key, i.e., the plane of the broad side of the key, at least one first flank angle (γ₄, γ₆; γ₅) of one, preferably of each, broad side (3, 3') being less than 90°, the first flank angle (γ₄, γ₅, γ₆, γ₇) being in the range of a specified angle of inclination of ϕ and ϕ + 90°, and the second flank angle (δ₄, δ₅, δ₆, δ₇) being in a range of the angle of inclination of ϕ + 90° and 180°, the angle of inclination (ϕ) being between 0° and 90°, all groove walls (6', 6"; 7', 7") extending in the region of the coding indentations (45) on the front edge of the key having flank angles (γ₆, δ₆; γ₇, δ₇), which are greater than 90°.

11. Lock cylinder for a flat key according to any of Claims 7 to 9, **characterized by** a wear protection pin (29) which may be displaced by a wall, in particular an undercut wall (5"), of a guide groove (5) or a guide rib, from a locked position to a release position, when the key is inserted into a key channel (23) of the lock cylinder.

## Revendications

1. Procédé de profilage d'au moins un côté large (3, 3') d'une clé plate, dans lequel une ébauche de clé (1) est maintenue dans un dispositif de serrage de manière à ce que son côté large (3) soit libre, dans lequel des rainures de guidage (4, 5) et des rainures de variation (6,7) sont fraisées dans le côté large par avance dans la direction longitudinale de la clé lors d'une opération d'usinage avec une fraise (8, 8') présentant des dents de fraise (11, 11') sur sa surface périphérique et tournant autour d'un arbre de fraise (19), les rainures de guidage (4, 5) et les rainures de variation (6,7) étant complémentaires par rapport au profil de la section longitudinale des dents de fraise (11, 11'), **caractérisé en ce que** l'axe de l'arbre de fraise est incliné avec un angle d'inclinaison (ϕ) par rapport au plan médian longitudinal (2) de la clé (1), dans lequel les nervures (14, 15, 16, 17) des dents de fraise (11) génèrent avec au moins une nervure (14, 15) une paroi de rainure de guidage en contre-dépouille (4', 5").

2. Procédé selon la revendication 1, **caractérisé en ce que** toutes les rainures de variation (6, 7) présentent des parois de rainure sans contre-dépouille (6', 6" ; 7', 7").

3. Procédé selon l'une des revendications précédentes, **caractérisé par** au moins deux paires de rainures paracentriques (4,5 ; 6,7).

4. Procédé selon l'une des revendications précédentes, **caractérisé en ce que** l'angle d'inclinaison (ϕ) est compris entre 5° et 50°, de préférence entre 10° et 40°.

5. Procédé selon l'une des revendications précédentes, **caractérisé en ce que** les deux côtés larges (3, 3') sont chacun usinés avec une fraise dont les axes (9, 9') de leur arbre de fraise sont inclinés par rapport au plan médian longitudinal (2) de la clé (1) avec un angle d'inclinaison, plus particulièrement avec le même angle d'inclinaison (ϕ).

6. Procédé selon l'une des revendications précédentes, **caractérisé en ce que** les flancs (14', 14", 15', 15", 16', 16", 17', 17") ont des angles de flanc (α₁, α₂, α₃, α₄ ; ß₁, ß₂, ß₃, ß₄) par rapport à l'axe de fraise (9), respectivement (10), qui sont >90°, de préférence >92°.

7. Clé plate avec des rainures profilées, parmi lesquelles au moins l'une est une rainure de guidage (4,5) présentant une paroi de rainure en contre-dépouille (4', 5") et toutes les rainures de variation (6, 7) situées dans la zone des entailles de codage frontales présentent des parois de rainure sans contre-dépouille (6', 6" ; 7', 7"), **caractérisée en ce que** la clé est réalisée selon l'une des revendications précédentes 1 à 6 de manière à ce que les flancs de rainure de chaque rainure profilée (4, 5, 6, 7) convergent vers le fond de rainure.

8. Clé plate selon la revendication 7, **caractérisée par** une partie latérale large (19, 20) présentant des rainures de variation (6, 7) laquelle s'étend sur une surface d'enveloppe cylindrique (R₁, R₂).

9. Clé selon l'une des revendications 7 ou 8, **caractérisée en ce qu'**une partie latérale large (19) s'étend sur une surface d'enveloppe cylindrique extérieure (R₂) et la partie latérale large (20) située en face de cette partie latérale large (19) s'étend sur une surface d'enveloppe cylindrique intérieure (R₁), les deux surfaces d'enveloppe cylindrique étant concentriques.

10. Clé plate selon l'une des revendications 7 à 9, dans laquelle toutes les rainures (4, 5, 6, 7) agencées chacune sur un coté large (3, 3') de la clé présentent à chaque fois des premières parois de rainure (4', 6' ; 5" , 7") vers un premier côté mince (43, 44) de la clé lesquelles ont un premier angle de flanc (γ₄, γ₆ ; γ₅, γ₇) par rapport au plan médian (2) de la clé, plus particulièrement le plan du côté large de la clé et des deuxièmes parois de rainure (4", 6" ; 5', 7') vers un deuxième côté mince (44, 43) de la clé lesquelles ont un deuxième angle de flanc (δ₄, δ₆ ; δ₅, δ₇) par rapport au plan médian (2) de la clé, plus particulièrement le plan du côté large de la clé, dans laquelle au moins une premier angle de flanc (γ₄, γ₆; γ₅) d'un côté large, préférablement de chaque côté large (3, 3'), est inférieur à 90°, dans laquelle les premiers angles de flanc (γ₄, γ₅, γ₆ ,γ₇) sont compris dans un intervalle d'un angle d'inclinaison prédéfini ϕ et ϕ+90° et les deuxièmes angles de flanc (δ₄, δ₅, δ₆, δ₇) sont compris dans un intervalle de l'angle d'inclinaison ϕ+90° et 180°, dans laquelle l'angle d'inclinaison (ϕ) est compris entre 0° et 90° et dans laquelle toutes les parois de rainure (6', 6" ; 7', 7") s'étendant dans la zone des entailles de codage (45) réalisées frontalement dans la clé présentent des angles de flanc (γ₆, δ₆ ; γ₇, δ₇) qui sont supérieurs à 90°.

11. Cylindre de serrure avec une clé plate selon l'une des revendications 7 à 9, **caractérisé par** une broche de protection contre l'usure (29) qui est déplaçable d'une position de verrouillage à une position de libération par une paroi, en particulier une paroi en contre-dépouille (5") d'une rainure de guidage (5) ou d'une nervure de guidage lors de l'insertion de la clé dans un canal de clé (23) du cylindre de serrure.
